# DEMANDE DE BREVET EUROPEEN

(11) **EP 1 452 450 A1**
(43) Date de publication de la demande: **01.09.2004**
(21) Numéro de dépôt: 04352002.2
(22) Date de dépôt: 25.02.2004
(51) Int. Cl.: B65B 27/12, A01F 15/00

(54) **Procédé et dispositif de conditionnement de fourrage sec en paquets emballés**

(30) Priorité: 26.02.2003 FR 0302337
(71) Demandeur: Montané, Patrick, 32300 Labejan (FR)
(72) Inventeur: Montané, Patrick, 32300 Labejan (FR)
(74) Mandataire: Cabinet BARRE LAFORGUE & associés

(57) **Abrégé**

L'invention concerne un procédé de conditionnement de fourrage sec, pour litière ou pour nourriture animale, en petits paquets emballés réalisés à partir de balles fourragères et contenant sensiblement une masse souhaitée de fourrage comprise entre 0,5 et 20 kg, caractérisé en ce que l'on retire les liens de chaque balle fourragère (1) ; on découpe chaque balle -qui présente une masse volumique donnée et est préférence parallélépipédique- selon des plans de coupe transversaux et selon au moins un plan de coupe longitudinal de façon à former des morceaux (23) de balle fourragère ayant des dimensions prédéterminées qui définissent un volume de fourrage correspondant sensiblement, selon ladite masse volumique, à la masse souhaitée pour les paquets emballés ; on conditionne individuellement chaque morceau (23) dans une enveloppe de façon à former un paquet de fourrage emballé (31). L'invention concerne également un dispositif de conditionnement de fourrage sec en paquets emballés, et un produit fourrager emballé (31) de 0,5 à 20 kg présentant plus de 20% de brins et/ou feuilles de longueur supérieure à 20 cm et ayant un aspect naturel tel que celui du fourrage en balles.

## Description

L'invention concerne un procédé et un dispositif de conditionnement, en paquets emballés, de fourrage sec pour litière ou pour nourriture animale. On notera que, par souci de simplicité, le terme "fourrage" est employé pour désigner non seulement un matériau végétal (foin par exemple) servant à la nourriture des animaux, mais aussi un matériau végétal (paille par exemple) servant à la réalisation de litière. Par ailleurs, on entend par fourrage "sec", un matériau présentant un taux d'humidité inférieur à 30% (taux de matière sèche supérieur à 70%) et de préférence inférieur à 15%.

L'invention concerne plus particulièrement un procédé et un dispositif de conditionnement de fourrage sec en paquets emballés de faible masse (de 0,5 à 20 kg) pour la nourriture ou la réalisation de litière d'animaux de petite taille du type rongeur (lapin, cochon d'Inde...) ou de taille moyenne (chèvre, mouton...).

L'invention concerne par ailleurs un procédé et un dispositif de conditionnement de fourrage sec en paquets emballés réalisés à partir de bottes ou balles fourragères telles que fabriquées au champ par des presses à balles à haute densité usuelles.

Les balles fourragères, telles que fabriquées au champ par des presses à balles usuelles, sont composées d'une succession de couches parallèles, maintenues solidaires par des liens, correspondant chacune à un aller-retour de piston de la presse à balles. A noter qu'une telle balle peut, en réalité, être fabriquée au champ (en poste mobile) après une période de séchage à l'air libre du matériau fourrager coupé, mais aussi en poste fixe (en entrepôt) après une période de séchage du matériau fourrager ramassé et entreposé en vrac dans une grange ventilée.

Une balle présente généralement, lorsqu'elle est parallélépipédique (il existe également des balles cylindriques) :
- une dimension selon sa direction de pressage comprise entre 100 et 280 cm, qui correspond à la plus grande dimension de la balle et définit donc une direction longitudinale de la balle ; à noter que, dans toute la suite, les termes "direction longitudinale" (ou éventuellement "direction longitudinale de pressage") d'une balle sont employés pour désigner sa direction de pressage, même si, de façon exceptionnelle, la dimension de la balle selon cette direction ne correspond pas à sa plus grande dimension ;
- une section transversale, dans un plan orthogonal à sa direction longitudinale, de 50 à 130 cm par 80 à 120 cm. Par souci de simplicité, dans toute la suite, toute balle est décrite dans une position dans laquelle sa direction longitudinale (intrinsèque) est horizontale ; la "hauteur" d'une balle désigne sa dimension selon une direction verticale (il s'agit de l'un des côtés de la section transversale de la balle) et sa "largeur" (l'autre côté de sa section transversale) désigne sa dimension dans une direction orthogonale aux directions longitudinale et verticale, dite direction transversale,
- une masse volumique comprise entre 150 et 260 Kg/m³ (soit un poids total variant en général de 300 à 700 Kg).

L'invention s'applique plus particulièrement à la réalisation de paquets emballés à partir de balles fourragères telles que fabriquées au champ qui présentent de plus un taux d'humidité inférieur à 30% et de préférence inférieur à 15% (le fourrage est assemblé et compacté une fois sec, ou, à défaut, la balle est laissée au champ ou dans une grange ventilée pour séchage avant d'être traitée). De telles balles sont dites balles fourragères sèches.

De par leurs dimensions, les balles ne peuvent être commercialisées en l'état. Elles sont par conséquent transformées pour la vente. Le fourrage destiné à la nourriture ou à la réalisation de litière d'animaux de petite taille est usuellement vendu en paquets emballés de 0,5 à 5 Kg selon leur destination, et d'environ 180 Kg/m³ de masse volumique.

Les procédés connus de réalisation de tels paquets de fourrage comprennent les étapes suivantes :
- désagrégation de la balle fourragère de façon à obtenir un matériau fourrager en vrac ; lors de cette étape, les brins et/ou feuilles de fourrage sont souvent sectionnés, déchiquetés, voire broyés et finement hachés, pour former des paillettes de quelques millimètres à 10 cm de longueur selon le procédé de désagrégation utilisé,
- dépoussiérage du matériau en vrac, notamment si ce dernier est obtenu par hachage de la balle fourragère,
- pesée du matériau en vrac de façon à sélectionner une quantité prédéterminée de matériau, dont la masse corresponde à celle souhaitée pour le paquet emballé fini,
- compactage de la quantité de matériau sélectionnée de façon à former un amas compact de matériau dont les dimensions et la densité correspondent à celles du paquet emballé fini,
- emballage dudit amas compact.

Ainsi, WO 97/38907 décrit un dispositif d'emballage de matériau fibreux (luzerne, foin, herbe...), comprenant, d'une part, une matrice tranchante en forme de treillis, dont les mailles mesurent de préférence 5 à 10 cm de côté et à travers laquelle chaque balle est poussée en vue de son découpage en fragments de petites tailles, de façon à obtenir un matériau en vrac grossier mais "fluide" (matériau décomposé ou friable, apte à "s'écouler" en aval de la matrice tranchante dans le dispositif). En variante ou en combinaison, le dispositif d'emballage décrit comprend des moyens pour déchiqueter et/ou broyer la balle de matériau fibreux.

De même, WO 97/11840 décrit un procédé de fabrication de paquets de nourriture pour animaux domestiques, à partir d'un matériau fibreux (foin, paille) fourni en vrac. Le matériau est dépoussiéré et pré-compacté dans un tunnel de pré-compactage, puis une quantité sélectionnée de matériau est compressée selon deux directions dans une chambre de compression, puis enveloppée dans un film plastique. Des découpes de séparation en portions individuelles sont ménagées dans l'amas compressé, au sein de la chambre de compression, selon des plans de séparation parallèles aux directions de compression.

Ces procédés connus présentent de nombreux inconvénients :
- ils comprennent une ou plusieurs étapes de compactage fortement consommatrices d'énergie,
- ils conduisent, pour la plupart, à l'obtention d'un produit fourrager emballé fortement divisé, d'aspect peu naturel ; or l'inventeur a découvert qu'un produit fourrager emballé présentant l'aspect naturel du fourrage fraîchement ramassé et compacté en balle au champ, pourrait remporter l'adhésion des utilisateurs et répondre à un besoin nouveau en produits naturels et de qualité,
- le matériau emballé, lorsqu'il est fortement divisé, est peu pratique à l'emploi : il génère beaucoup de poussière qui peut s'échapper de l'emballage lors de l'ouverture du paquet emballé ; des paillettes de matériau peuvent tomber hors de l'emballage lors de la distribution d'une ration de matériau ;
- dans le cas d'un fourrage alimentaire, les qualités nutritives du fourrage sont altérées par l'ensemble des manipulations et traitements qu'il subit ;
- les multiples découpes pratiquées, le cas échéant, dans la balle fourragère pour la désagréger et l'éventuel broyage des fragments obtenus génèrent une importante quantité de poussière et des pertes équivalentes en fourrage ;
- les dispositifs de mise en oeuvre de tels procédés comprennent une multitude de stations de travail, moyens de convoyage..., nécessaires à l'exécution des différentes étapes du procédé ; ces dispositifs sont particulièrement complexes, encombrants et onéreux.

On connaît également US-5,088,271 qui décrit un procédé de conditionnement d'un matériau fourrager (récolte, herbe, luzerne) en paquets emballés de 25 kg, ayant une section transversale de 45x20 cm² et une longueur de 60 cm. Les paquets sont fabriqués à partir de balles de matériau fané présentant une section transversale de 45x40 cm² et une longueur de 90 cm. La balle ficelée est découpée selon un plan de coupe longitudinal vertical entre deux liens, pour former deux paquets identiques ficelés de 45x20 cm² de section transversale. Chaque paquet est ensuite comprimé selon la direction longitudinale jusqu'à présenter une longueur de 45 cm, puis emballé dans un sac de 45x20 cm² de section transversale et de 60 cm de longueur, à l'intérieur duquel le paquet comprimé se détend selon la direction longitudinale pour former un paquet emballé de 60 cm de longueur.

Non seulement ce dispositif ne permet pas de réaliser des paquets emballés de faible masse (0,5 à 20 kg) pour animaux de petite taille, mais de plus, les paquets obtenus contiennent de la ficelle (qui entoure les brins de matériau), qu'il convient de retirer soigneusement avant tout usage du matériau. Le risque n'est pas exclu qu'un animal ingère un morceau de ficelle oublié lors de la distribution de sa ration de nourriture. De surcroît, le procédé utilise des balles fourragères de petites dimensions, qui ne correspondent plus aux standards actuels. Appliqué à des balles de gros gabarit telles que décrites en introduction, il conduirait à l'obtention de paquets emballés de 150 à 350 kg, impropres à la vente. Enfin, ce procédé prévoit une étape de recompression de la balle qui nécessite une importante énergie.

On connaît enfin GB 1 512 804, qui décrit un procédé de conditionnement d'herbe verte partiellement fanée de façon à présenter un taux de matière sèche compris entre 40 et 50%. L'herbe est ramassée au champ en vrac, puis compactée dans une presse, dite presse à balles, qui délivre un flot continu d'herbe compactée légèrement humide, ayant une section transversale rectangulaire de 50x40 cm². Le flot compact continu est découpé selon des plans transversaux pour former des tranches de 15 à 30 cm d'épaisseur. Chaque tranche est emballée dans un film plastique muni d'une valve anti-retour pour l'évacuation de l'air et autres gaz, évitant ainsi une fermentation indésirée de l'herbe encore humide et permettant son séchage jusqu'à 80% de matière sèche.

Ce procédé s'applique uniquement à de l'herbe verte ayant un taux de matière sèche compris entre 40 et 50%, dont il résulte que le flot compact délivré par la presse à balles présente une cohésion. Il ne s'applique pas à un matériau fourrager sec, et ne part pas de balles fourragères ficelées telles que fabriquées au champ, que l'on traite plusieurs jours, voire plusieurs mois, plus tard et qui présentent, selon les standards actuels, une section transversale bien supérieure à celle du flot d'herbe compact réalisé dans GB 1 512 804. En outre, ce procédé antérieur conduit à l'obtention de paquets emballés de 18 à 36 kg destinés à la nourriture des chevaux.

Finalement, aucun procédé n'existe à ce jour pour réaliser des paquets emballés de fourrage sec ayant une faible masse (de 0,5 à 20 kg) sans désagréger initialement la balle fourragère du champ.

L'invention vise à pallier ces inconvénients en proposant notamment un procédé et un dispositif de conditionnement de fourrage sec en paquets emballés de faible masse (entre 0,5 et 20 kg), à partir de balles fourragères sèches telles que fabriquées au champ et maintenues par des liens (c'est-à-dire ficelées), et de façon à obtenir un produit d'aspect naturel. En particulier, l'invention vise à proposer un produit fourrager emballé faiblement divisé.

L'invention vise également à proposer un dispositif et un procédé de conditionnement de fourrage qui préservent l'intégrité et la qualité du fourrage, c'est-à-dire ses propriétés nutritives dans le cas d'un fourrage alimentaire et ses propriétés d'absorption dans le cas d'un fourrage pour litière.

Un autre objectif de l'invention est de limiter les pertes en fourrage, et de proposer un dispositif et un procédé plus simples et plus économiques.

Un autre objectif de l'invention est de proposer un procédé ne comprenant aucune étape de compactage ou compression du matériau fourrager, non seulement en vue de préserver son aspect naturel et ses propriétés, mais aussi et surtout à des fins économiques.

Un autre objectif de l'invention est de fournir un produit fourrager emballé facile à utiliser, et notamment plus propre et plus pratique à déballer et à distribuer.

Un autre objectif de l'invention est de fournir un produit fourrager emballé exempt de ficelle ou de tout autre lien, de façon à disposer d'un produit directement utilisable une fois son emballage retiré, et à écarter définitivement tout risque d'étouffement et d'intoxication de l'animal avec des morceaux de ficelle.

L'invention concerne un procédé de conditionnement de fourrage sec pour litière ou pour nourriture animale, en paquets emballés contenant sensiblement une masse souhaitée de fourrage comprise entre 0,5 et 20 kg, lesdits paquets étant réalisés à partir de balles fourragères sèches compactées au moins selon une direction longitudinale de pressage et maintenues par des liens,
caractérisé en ce que :
- on retire les liens de chaque balle fourragère,
- on achemine chaque balle fourragère ainsi déliée vers un poste de découpage,
- on découpe chaque balle fourragère, qui présente une masse volumique donnée, de façon à former des morceaux de balle fourragère ayant des dimensions prédéterminées qui définissent un volume de fourrage correspondant sensiblement, selon ladite masse volumique, à la masse souhaitée pour les paquets emballés, chaque balle étant découpée selon des plans de coupe transversaux sensiblement orthogonaux à la direction longitudinale de pressage de la balle, de façon à former des tranches de balle, et selon au moins un plan de coupe longitudinal contenant sensiblement ladite direction longitudinale,
- on sépare les morceaux ainsi découpés et on achemine individuellement chaque morceau vers un poste d'emballage,
- on conditionne individuellement chaque morceau dans une enveloppe de façon à former un paquet de fourrage emballé.

L'invention concerne également un dispositif de conditionnement de fourrage sec pour litière ou pour nourriture animale, en paquets emballés contenant sensiblement une masse souhaitée de fourrage comprise entre 0,5 et 20 kg, lesdits paquets étant réalisés à partir de balles fourragères sèches compactées au moins selon une direction longitudinale de pressage et maintenues par des liens, caractérisé en ce qu'il comprend :
- un poste de réception et de convoyage de balles fourragères de masse volumique donnée, apte à acheminer chaque balle fourragère jusqu'à un poste de découpage, et dans lequel les liens de chaque balle fourragère sont retirés,
- ledit poste de découpage des balles fourragères, comportant des éléments de coupe adaptés pour découper chaque balle de façon à former des morceaux de balle fourragère ayant des dimensions prédéterminées qui définissent un volume de fourrage correspondant, selon ladite masse volumique, à la masse souhaitée pour les paquets emballés, les éléments de coupe comprenant, d'une part, des éléments de coupe transversale, adaptés pour découper chaque balle selon des plans de coupe transversaux sensiblement orthogonaux à la direction longitudinale de pressage de la balle de façon à former des tranches de balle, et, d'autre part, des éléments de coupe longitudinale, adaptés pour découper chaque balle selon au moins un plan de coupe longitudinal contenant sensiblement ladite direction longitudinale,
- des moyens de séparation des morceaux découpés, et des moyens de convoyage de morceaux adaptés pour acheminer individuellement chaque morceau jusqu'à un poste d'emballage,
- ledit poste d'emballage, adapté pour conditionner individuellement chaque morceau dans une enveloppe de façon à former un paquet de fourrage emballé.

Selon l'invention, on découpe donc directement, dans les balles de fourrage, des morceaux correspondant chacun, en taille et en poids, à un paquet emballé fini. Le procédé selon l'invention s'éloigne ainsi radicalement de la direction suivie par les procédés antérieurs pour réaliser des paquets de faible masse, lesquels procédés préconisent, dans un premier temps, de désagréger les balles fourragères et, éventuellement, de diviser les brins et/ou feuilles de fourrage en paillettes de longueur réduite (de quelques millimètres à 5 ou 10 cm), puis de reconstituer des paquets de fourrage à partir du matériau en vrac précédemment obtenu.

De surcroît, selon l'invention, les morceaux sont découpés dans des balles fourragères sèches préalablement déliées. L'inventeur a en effet constaté avec surprise que les morceaux de balle découpés selon l'invention conservent une certaine cohésion, non seulement latéralement (dans les directions verticale et transversale), mais aussi dans la direction longitudinale de pressage de la balle, en dépit de leur faible dimension et de l'absence de liens. Ce résultat est d'autant plus inattendu qu'il est contraire aux enseignements de l'ensemble des techniques antérieures connues : les techniques antérieures de découpage des balles fourragères en vue de leur désagrégation conduisent à des fragments de petites tailles friables et dépourvus de tenue mécanique ; US-5,088,271 préconise de conserver les liens des balles fourragères pour les maintenir longitudinalement ; dans GB 1 512 804, le découpage en tranches du flot continu à la sortie de la presse est rendu possible par une teneur élevée de l'herbe en humidité, qui assure un effet liant. Ce résultat inattendu facilite notamment les opérations d'emballage des morceaux et les diverses manipulations qu'ils subissent. Ce résultat semble s'expliquer a posteriori par le fait que les balles sont fabriquées par assemblage et compactage de brins fraîchement coupés ou coupés depuis peu, parfois encore un peu humides, puis laissées à l'air libre ou entreposées en vue de leur séchage final (perte de 10% d'humidité). Selon l'invention, elles ne sont conditionnées en paquets emballés que lorsqu'elles présentent au moins 70% -et de préférence plus de 85%, voire 90%- de matière sèche. L'étape de séchage final, qui intervient après pressage de la balle, confère à celle-ci une cohésion propre (notamment dans des plans transversaux), dont les morceaux de balle découpés selon l'invention, parce qu'ils sont composés de brins faiblement divisés, gardent la "mémoire".

Le procédé selon l'invention permet de proposer un nouveau produit fourrager emballé, qui présente l'aspect naturel du fourrage fraîchement ramassé et compacté en balle. En effet, au sein de la balle, les brins de fourrage s'étendent principalement dans des plans transversaux. Dans ces plans, les brins présentent une direction privilégiée tout en étant imbriqués les uns dans les autres. Les découpes pratiquées selon l'invention dans des plans transversaux ne divisent donc que très faiblement les brins de fourrage. Par ailleurs, le nombre de découpes pratiquées dans la balle fourragère selon des plans longitudinaux étant réduit à son strict minimum, la longueur initiale des brins et/ou feuilles est majoritairement conservée. En particulier, le matériau fourrager emballé présente plus de 20% de brins et/ou feuilles de longueur supérieure à 20 cm.

De surcroît, les brins et/ou feuilles étant faiblement divisés, la qualité du fourrage et ses propriétés sont préservées. Le procédé selon l'invention ne génère pas, ou peu, de poussière de fourrage ; les pertes en fourrage subséquentes sont considérablement limitées.

En outre, le procédé selon l'invention est réduit à un faible nombre d'opérations, particulièrement simples de surcroît : les étapes de pesée et de compactage destinées, dans les procédés antérieurs de fabrication de petits paquets emballés, à permettre de reconstituer des paquets à partir d'un matériau en vrac sans cohésion, ainsi que les étapes de dépoussiérage dudit matériau en vrac, sont ici supprimées (aucune étape de compactage, quelle qu'elle soit, n'est prévue dans le procédé selon l'invention) ; les opérations de découpage de la balle fourragère sont simplifiées. Il en résulte une réduction considérable des coûts de fabrication des paquets emballés.

Et contrairement au procédé de US-5,088,271, le procédé selon l'invention fournit des paquets de petite taille et de faible masse, de surcroît dépourvus de ficelle.

Avantageusement et selon l'invention, on utilise des balles fourragères parallélépipédiques. Les morceaux obtenus par découpage de la balle selon des plans transversaux et longitudinaux sont également parallélépipédiques, ce qui présente deux avantages principaux : les paquets réalisés (parallélépipédiques) peuvent être aisément palettisés et rangés de façon à occuper un minimum de place en vue de leur transport ou de leur stockage ; les dimensions des morceaux peuvent être choisies de façon, non seulement à réaliser des paquets de masse souhaitée, mais aussi à éviter toute chute (déchet) de balles fourragères. A cette fin, les balles sont notamment découpées selon des plans longitudinaux délimitant des morceaux de dimension sensiblement égale selon la direction transversale.

Avantageusement et selon l'invention, les dispositif et procédé selon l'invention présentent également l'une ou plusieurs des caractéristiques suivantes :
- les moyens de convoyage de morceaux sont adaptés pour maintenir chaque morceau au moins au niveau de ses plans de coupe transversaux, c'est-à-dire au moins selon la direction longitudinale (direction -intrinsèque- de pressage de la balle utilisée, mais qui n'est pas nécessairement la direction de plus grande longueur du morceau découpé) ; bien que les morceaux présentent une relative cohésion dans cette direction longitudinale, les opérations de convoyage et d'emballage des morceaux sont facilitées par l'utilisation de tels moyens de convoyage, et tout risque d'effritement des morceaux est ainsi écarté ;
- dans le procédé selon l'invention, chaque morceau est individuellement acheminé en étant maintenu au moins au niveau de ses plans de coupe transversaux ;
- les moyens de convoyage de morceaux comprennent par exemple un convoyeur à bandes synchronisées comportant au moins deux bandes sans fin en défilement, en regard et à proximité l'une de l'autre sur une portion de leur longueur de façon à délimiter un chemin de convoyage ; l'une -première- desdites bandes est maintenue à un emplacement fixe le long de ce chemin, la deuxième bande étant agencée libre le long d'une partie au moins dudit chemin de façon à venir plaquer les morceaux de balle contre la première bande ;
- lesdites première et deuxième bandes sont agencées de façon à s'étendre, à l'entrée du convoyeur, selon une direction de défilement sensiblement orthogonale à la direction longitudinale de pressage (c'est-à-dire à la direction de l'épaisseur des tranches de balle) ; en d'autres termes, les deux bandes sont parallèles aux plans de coupe transversaux des morceaux, à l'entrée du convoyeur ; ainsi les morceaux sont maintenus serrés entre les deux bandes au niveau de leurs plans de coupe transversaux, selon la direction initiale de pressage de la balle ;
- les moyens de séparation comprennent au moins un organe d'écartement des bandes adapté pour modifier la distance d'écartement desdites bandes à l'entrée du convoyeur de morceaux, de façon à pouvoir, d'une part écarter les bandes d'une distance supérieure à une dimension, dite épaisseur, d'un morceau selon une direction orthogonale auxdites bandes en vue de l'introduction dudit morceau dans le convoyeur, et d'autre part rapprocher les bandes jusqu'à une distance égale ou inférieure à l'épaisseur du morceau en vue de son entraînement par lesdites bandes ;
- le poste de réception et de convoyage de balles comprend : un convoyeur de balles à rouleaux, comportant, d'une part, une table de convoyage formée d'une succession de rouleaux inférieurs montés rotatifs autour d'axes de rotation transversaux et, d'autre part, des joues latérales adaptées pour contenir latéralement (selon la direction transversale) les balles ; un poussoir motorisé rétractable, dit poussoir de convoyage, monté coulissant sur un rail supérieur en regard de ladite table, apte à déplacer au moins une balle selon sa direction longitudinale vers le poste de découpage. A noter que le poussoir de convoyage est de préférence apte à déplacer simultanément plusieurs balles agencées à la suite les unes des autres ;
- le poste de réception et de convoyage de balles comprend des moyens de pesée adaptés pour peser chaque balle et calculer sa masse volumique,
- les éléments de coupe transversale comprennent une scie de type agricole, dite scie transversale, s'étendant dans un plan sensiblement transversal, des moyens motorisés d'entraînement de la scie transversale aptes à animer la scie de petits mouvements alternatifs transversaux et à déplacer la scie transversale en translation selon la direction verticale, le dispositif comprenant des moyens de déplacement de chaque balle à travers le poste de découpage et des moyens d'immobilisation de la balle sous la scie transversale en vue de son tranchage,
- les moyens susmentionnés de déplacement des balles à travers le poste de découpage sont réalisés par le poussoir de convoyage ; les moyens d'immobilisation susmentionnés comprennent une butée, dite butée de tranchage, en aval de la scie transversale contre laquelle vient buter la balle poussée par le poussoir de convoyage;
- le dispositif comprend des moyens de réglage automatique ou manuel de la position relative de la scie transversale et de la butée de tranchage, adaptés, par exemple, pour ajuster la position de ladite butée ou de ladite scie relativement au convoyeur de balle (qui est fixe dans le dispositif) et permettre ainsi de définir et d'ajuster une dimension (dite épaisseur) des tranches de balles en fonction de la masse volumique de la balle et/ou de la masse souhaitée pour les paquets emballés ;
- le dispositif comprend une plaque verticale coulissante, dite plaque de séparation, s'étendant dans un plan transversal en regard de la scie transversale pour la séparation de la tranche de balle fourragère découpée ;
- la balle fourragère est découpée selon au moins un plan de coupe longitudinal vertical contenant sensiblement la direction longitudinale de la balle et une direction verticale ;
- le dispositif comprend des éléments de coupe longitudinale verticale, comportant au moins une scie, dite scie verticale, de type agricole, chaque scie verticale s'étendant sensiblement dans un plan longitudinal vertical, et des moyens motorisés d'entraînement aptes à animer chaque scie verticale de petits mouvements alternatifs verticaux, le dispositif comprenant des moyens de déplacement de la balle ou d'une tranche de balle selon la direction longitudinale à travers la(les)dite(s) scie(s) verticale(s) ou des moyens de déplacement de chaque scie verticale en translation selon la direction longitudinale à travers la balle ou tranche de balle ; à noter que ces découpes verticales peuvent être réalisées dans une tranche de balle, avant ou après découpe de ladite tranche ;
- les moyens de déplacement des balles à travers la(les)dite(s) scie(s) verticale(s) sont réalisés par le poussoir de convoyage ;
- la balle fourragère est découpée selon au moins un plan de coupe longitudinal horizontal contenant sensiblement la direction longitudinale de la balle et une direction horizontale ;
- le dispositif comprend des éléments de coupe longitudinale horizontale, comportant au moins une scie circulaire, dite scie horizontale, de type agricole, chaque scie horizontale s'étendant sensiblement dans un plan horizontal (et donc longitudinal), et des moyens motorisés d'entraînement de chaque scie en rotation, le dispositif comprenant des moyens de déplacement, tels qu'un poussoir latéral, d'une tranche de balle selon la direction transversale à travers la(les)dite(s) scie(s) horizontale(s) ou des moyens de déplacement de chaque scie circulaire horizontale en translation selon la direction transversale à travers la balle ou tranche de balle ; à noter que ces découpes horizontales peuvent être réalisées dans une tranche de balle avant ou après découpe de ladite tranche ;
- le poste d'emballage comprend des moyens de conformation d'une enveloppe en forme de sac à partir d'une bande de film plastique en défilement, notamment adaptés pour former un tube de film à partir de la bande de film plastique, fermer latéralement le tube par soudure mutuelle (thermique par exemple) des bords longitudinaux opposés de la bande de film, souder (par thermosoudure par exemple) une section du tube en vue de former un sac, puis souder une autre section dudit tube en vue de fermer le sac suite au remplissage dudit sac avec un morceau de balle fourragère ;
- le dispositif comprend des moyens d'introduction des morceaux de balle fourragère dans le poste d'emballage, adaptés pour introduire séparément chacun des morceaux dans un sac (et notamment dans un sac conformé comme précédemment expliqué) ;
- les moyens de convoyage de morceaux comprennent au moins une première bande sans fin s'étendant sur toute la longueur d'un chemin de convoyage entre le poste de découpage et le poste d'emballage, une deuxième bande sans fin s'étendant en regard et à proximité de la première bande sur une portion principale amont dudit chemin de convoyage à partir du poste de découpage, et une troisième bande sans fin s'étendant, dans le prolongement de la deuxième bande, en regard et à proximité de la première bande sur une portion secondaire aval du chemin de convoyage jusqu'au poste d'emballage. Les moyens d'introduction susmentionnés comprennent alors préférentiellement un poussoir automatique, intercalé entre la deuxième et la troisième bande et actionné en synchronisation avec les moyens de séparation des morceaux à l'entrée du convoyeur et en fonction de la vitesse de défilement des bandes ;
- le dispositif comprend des moyens de déchargement des paquets emballés, tels qu'un convoyeur à tapis transportant les paquets jusqu'à une aire de transfert desdits paquets (chargement des paquets sur des palettes par exemple), en vue de leur transport ou de leur stockage,
- le dispositif comprend un détecteur de métal en amont du poste de découpage en vue de la détection d'éventuels débris métalliques indésirables (morceaux de clôtures, morceaux d'instruments agricoles...), et un système de sécurité apte, en cas de détection de métal par ledit détecteur, à inhiber le poussoir de convoyage et/ou les éléments de coupe, et éventuellement à émettre un signal d'alerte (signal sonore, lumineux..., à destination d'un opérateur).

L'invention s'étend aux paquets de fourrage emballés selon l'invention, c'est-à-dire à un produit fourrager emballé obtenu par le procédé de conditionnement selon l'invention. Un tel produit fourrager emballé est caractérisé en ce qu'il comprend, d'une part, une masse comprise entre 0,5 et 20 kg d'un matériau fourrager sec compacté présentant plus de 20% de brins et/ou feuilles de longueur supérieure à 20 cm et ayant un aspect naturel tel que celui du fourrage en balles (tel que récolté, rassemblé et compacté en balles au champ), et d'autre part, une enveloppe dans laquelle est conditionné ledit matériau fourrager. Selon la masse souhaitée, et donc les dimensions, des paquets, le matériau fourrager peut présenter plus de 50% de brins et/ou feuilles de longueur supérieure à 20 cm. L'enveloppe comprend de préférence un film plastique transparent formant sac, imprimé sur une partie de sa surface.

L'invention concerne également un procédé et un dispositif de conditionnement de fourrage caractérisés en combinaison par tout ou partie des caractéristiques mentionnées ci-dessus et ci-après.

D'autres buts, caractéristiques et avantages de l'invention apparaîtront à la lecture de la description suivante qui se réfère aux figures annexées représentant des modes de réalisation préférentiels de l'invention donnés uniquement à titre d'exemples non limitatifs, et dans lesquelles :
- la figure 1 est une vue en perspective d'un dispositif selon l'invention,
- la figure 2 est une vue en perspective du dispositif de la figure 1 dont certaines parties ont été "arrachées",
- la figure 3 est une coupe, vue de derrière, du dispositif des figures 1 et 2, selon un plan vertical longitudinal immédiatement à l'avant d'une paroi 15a du convoyeur de morceaux 5 du dispositif. A noter que sur cette figure, la paroi 15b dudit convoyeur a été retirée pour une meilleure compréhension.

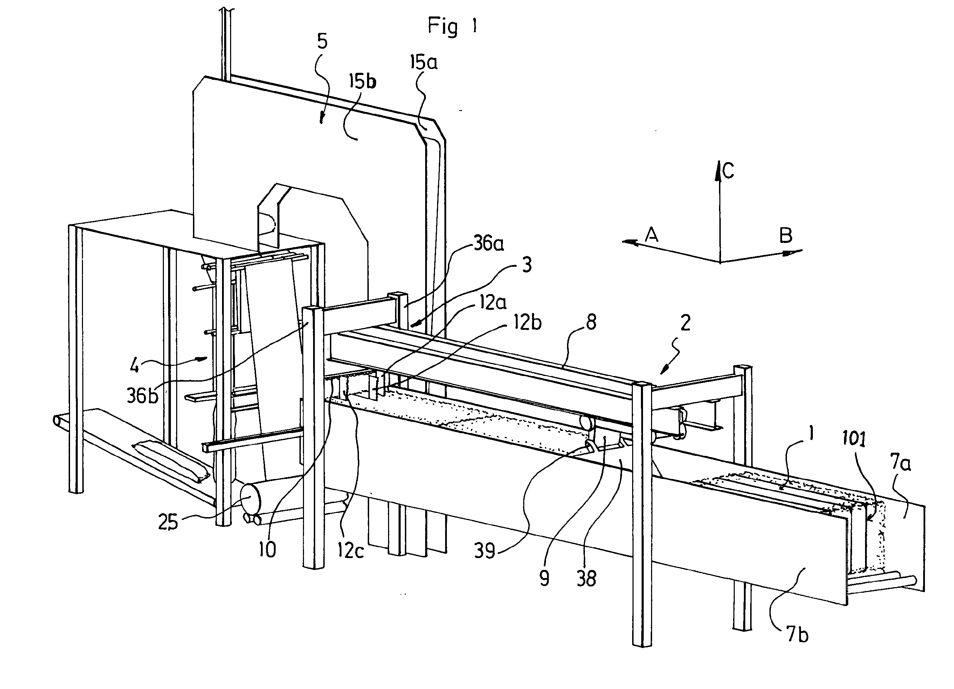

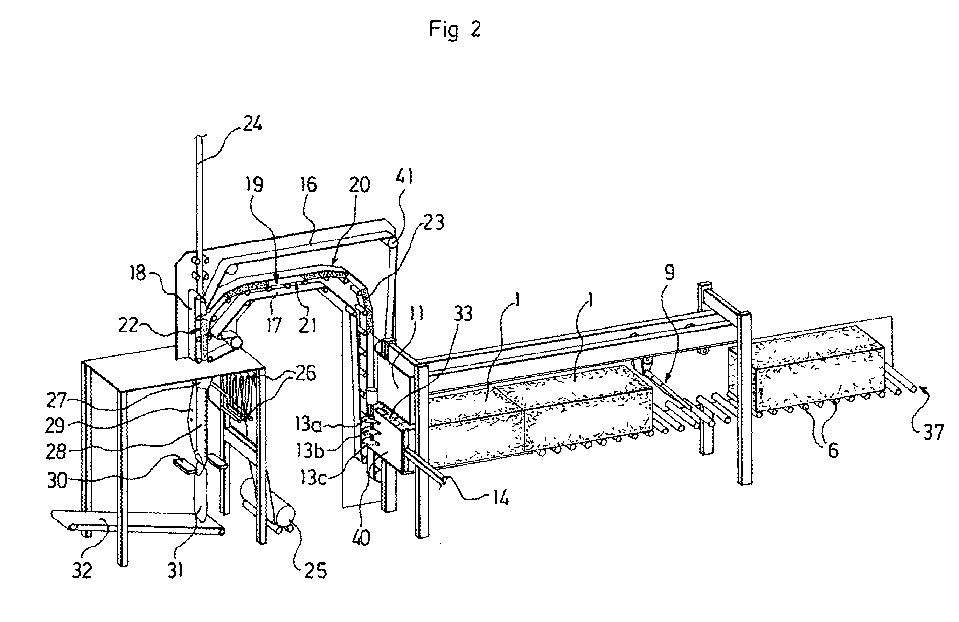

Le dispositif selon l'invention illustré aux figures 1 à 3 comprend un poste 2 de réception et de convoyage de balles fourragères 1 parallélépipédiques, un poste 3 de découpage des balles 1, un convoyeur 5 des morceaux de balle issus du poste 3 de découpage, et un poste 4 d'emballage desdits morceaux.

Les balles fourragères 1 utilisées sont des balles, de préférence parallélépipédiques, telles que pressées au champ par des presses à balles usuelles. Elles présentent une longueur (dimension selon leur direction longitudinale A) comprise entre 100 et 280 cm, une hauteur (dimension selon la direction verticale C) comprise entre 50 et 130 cm, et de préférence une largeur (dimension selon la direction transversale B) calibrée de l'ordre de 110 à 120 cm. La direction longitudinale A coïncide avec la direction de pressage de la balle, de sorte que les brins et/ou feuilles de fourrage s'étendent principalement dans des plans transversaux (plans sensiblement orthogonaux à la direction longitudinale A). Chaque balle telle que fabriquée au champ 1 est entourée de liens 101 agencés selon la direction longitudinale en vue de maintenir la balle selon cette direction (qui est la direction de pressage).

Le poste 2 de réception et de convoyage comprend un convoyeur de balles, comportant une table 37 formée de rouleaux 6 s'étendant tous dans un même plan sensiblement horizontal et deux joues latérales 7a et 7b permettant de guider et de contenir latéralement les balles 1 sur ladite table. Les rouleaux sont montés rotatifs sur les joues 7a et 7b autour de leur axe longitudinal respectif, qui s'étend sensiblement selon la direction transversale.

Le poste 2 comprend de plus un poussoir de convoyage 9, comportant une pelle 38 (plaque plane) pivotante articulée autour d'un axe transversal 39 entre une position de convoyage, sensiblement verticale, dans laquelle la pelle peut être rigidement bloquée et le poussoir déplacé en translation selon la direction longitudinale vers l'aval du convoyeur en vue de pousser les balles 1 vers le poste 3 de découpage, et une position escamotée, sensiblement horizontale, dans laquelle le poussoir peut être déplacé en translation selon la direction longitudinale vers l'amont du convoyeur en vue de venir chercher la balle suivante déchargée à l'entrée du convoyeur. A cette fin, le poussoir est monté coulissant sur un rail supérieur 8 et mû par un moteur (non représenté). A titre d'exemple, ledit moteur présente une puissance de 4 kW/h et est adapté pour déplacer le poussoir de convoyage "en charge" en translation vers l'aval de façon à pousser deux balles (ou éventuellement une balle) à une vitesse de l'ordre de 10 cm/s, et pour déplacer le poussoir de convoyage "à vide" en translation vers l'amont à une vitesse de 40 cm/s.

Les balles 1 sont transportées et déchargées à la suite les unes des autres sur la table 37 au moyen d'un engin quelconque approprié connu. Dans une première version, les rouleaux sont montés libres en rotation et chaque balle est manuellement poussée sur le convoyeur de balles jusqu'à une position de convoyage automatique située en aval de l'extrémité amont du rail supérieure 8, position dans laquelle la balle peut être "accrochée" et poussée vers le poste de découpage par la pelle 38. Dans une deuxième version, les rouleaux sont entraînés en rotation par un moteur de façon à pouvoir déplacer les balles 1 à une vitesse de l'ordre de 30 cm/s par exemple (la charge d'une balle 1 sur la table de convoyage étant de l'ordre de 500 kg par mètre linéaire).

Les liens 101 de chaque balle fourragère 1 sont sectionnés et retirés, soit manuellement par un opérateur, soit de façon automatique par des moyens mécaniques appropriés, non représentés. Cette opération peut être effectuée, soit immédiatement après déchargement de la balle sur la table 37, en amont de la position de convoyage automatique, soit en aval de cette position, alors que la balle est poussée par le poussoir de convoyage 9. Cette deuxième solution est préférée, compte tenu que la pression exercée par le poussoir de convoyage sur les balles induit un léger compactage des balles et un relâchement subséquent des liens (réduction de la tension desdits liens), facilitant leur retrait.

Le poste 3 de découpage comprend une scie transversale 10 s'étendant sensiblement dans un plan transversal, surmontée d'une plaque de séparation 11. La scie transversale et la plaque de séparation sont montées coulissantes selon la direction verticale C entre une position supérieure dans laquelle la scie transversale 10 s'étend au-dessus de la balle 1 et autorise l'avancement de la balle à travers la poste de découpage (sous l'effet du poussoir 9), et une position inférieure dans laquelle la scie transversale 10 s'étend immédiatement au-dessus de la table de convoyage et la plaque de séparation est en regard d'une section de la balle 1. La scie transversale 10 et la plaque de séparation 11 sont guidées à cette fin par des rails verticaux 36a et 36b et sont mues par un moteur non représenté. La scie est par ailleurs animée, au moyen d'un moteur (non représenté), de petits mouvements alternatifs en translation selon la direction transversale lors de son déplacement vertical vers le bas à travers la balle 1.

Les balles fourragères sont poussées en direction du poste de découpage par le poussoir de convoyage 9, jusqu'à ce que la balle qui traverse ledit poste (balle aval) vienne au contact d'une butée de tranchage 40. La scie transversale 10 et la plaque de séparation 11, initialement en position supérieure, sont alors déplacées vers le bas en vue du tranchage de la balle 1 (la scie étant simultanément animée de mouvements transversaux), tandis que le poussoir de convoyage 9 est soit immobilisé soit déplacé en position escamotée vers l'amont du convoyeur de balles. Les mouvements de la scie 10 et de la plaque 11 sont synchronisés avec les déplacements du poussoir de convoyage 9 de façon à déclencher l'opération de tranchage à l'instant où la balle vient au contact de la butée de tranchage. En variante, les moyens d'entraînement de la scie transversale et de la plaque de séparation sont asservis à des moyens appropriés (non représentés) de détection du contact de la balle 1 et de la butée 40.

La position relative de la butée de tranchage 40 et de la scie transversale 10 peut être modifiée et ajustée de façon à faire varier l'épaisseur (dimension selon la direction A) de la tranche de balle découpée. En particulier, le dispositif comprend des moyens de réglage de la position de la butée 40 relativement à une partie fixe du dispositif telle que le convoyeur de balles. De tels moyens de réglage permettent d'une part d'ajuster l'épaisseur des morceaux en fonction de la masse volumique de la balle en vue de réaliser des paquets emballés 31 de poids constant donné, et, d'autre part, de faire varier l'épaisseur des morceaux en vue de réaliser des paquets emballés 31 de poids différents.

Le dispositif comprend éventuellement des moyens de pesée de chaque balle 1 déchargée sur la table 37, auxquels sont asservis les moyens de réglage de position de la butée de tranchage 40. Il est ainsi possible d'ajuster la position de cette butée pour chaque balle et de contrôler avec une relative précision le poids des paquets emballés réalisés. En variante, la position de la butée de tranchage est choisie et fixée en fonction d'une valeur moyenne d'échantillonnage de la masse volumique des balles, communiquée par le fournisseur de balles fourragères ou calculée par pesée (à l'aide de moyens indépendants du dispositif selon l'invention) d'un nombre représentatif limité de balles fourragères.

Il est à noter que les balles fourragères sont introduites dans le dispositif à la suite les unes des autres et déplacées deux par deux par le poussoir de convoyage 9, de façon à former un flux continu de balles fourragères. Les découpes transversales sont réalisées sans considération aucune de la position de la découpe par rapport à la balle. Une même tranche peut donc être formée de deux portions de balles issues de deux balles successives. Le procédé et le dispositif selon l'invention ne génèrent aucune chute (fragments inutilisés) de balles fourragères.

Le poste de découpage 3 comprend également trois scies verticales 12a, 12b et 12c s'étendant dans des plans sensiblement longitudinaux verticaux, régulièrement espacés. Dans l'exemple illustré (non limitatif), les scies verticales sont espacées d'une distance de l'ordre de 30 cm. Lesdites scies verticales sont agencées en amont de la scie transversale 10, et sont entraînées par un moteur (non représenté) de façon à décrire de petits mouvements alternatifs verticaux. Les scies verticales découpent chaque balle en quatre portions longitudinales sensiblement égales, au fur et à mesure de l'avancement de la balle sous l'action du poussoir de convoyage 9. Dans une version de l'invention, ces scies sont escamotables.

En aval de la scie transversale 10, on obtient donc quatre portions 33, dites barres de fourrage, de tranche de balle fourragère.

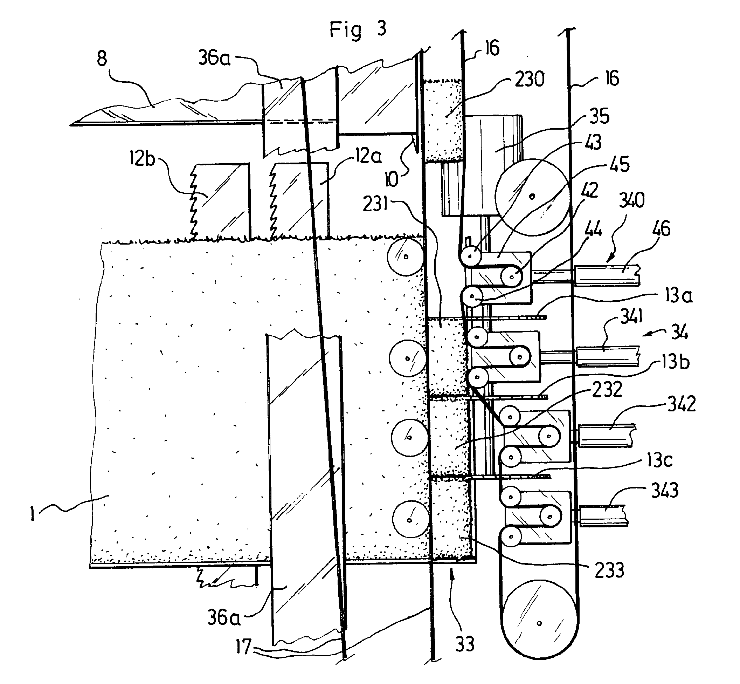

Le poste de découpage comprend également trois scies circulaires horizontales 13a, 13b et 13c, s'étendant sensiblement dans des plans horizontaux régulièrement espacés, en aval de la scie transversale 10. Dans l'exemple illustré, les scies horizontales sont espacées d'une distance de l'ordre de 20 cm. Les scies horizontales sont montées sur un même arbre vertical et entraînées simultanément en rotation par un moteur 35 illustré à la figure 3. Les scies horizontales découpent chaque barre 33 de fourrage (précédemment découpée par la scie transversale 10 et les scies verticales 12a, 12b, 12c), au fur et à mesure que ladite barre de fourrage 33 est déplacée selon la direction transversale B à travers les scies horizontales au moyen d'un poussoir latéral 14. Durant cette opération, la plaque de séparation 11 et la scie transversale 10 sont soit maintenues en position inférieure soit déplacées selon la direction verticale vers le haut, et le poussoir de convoyage 9 est soit immobilisé soit déplacé en position escamotée vers l'amont du convoyeur de balles.

On obtient ainsi, en aval des scies horizontales 13a, 13b, 13c, quatre portions 230, 231, 232, 233, dits pavés de fourrage, de barre de fourrage formant des morceaux destinés à être emballés. La position des scies horizontales 13a, 13b, 13c est réglable selon la direction longitudinale A en fonction de la position de la butée de tranchage 40 de façon à permettre le découpage des barres de fourrage 33 sur toute leur épaisseur.

Le déplacement du poussoir latéral 14 selon la direction transversale provoque, non seulement le découpage des barres de fourrage 33 par les scies horizontales 13a à 13c, mais aussi l'introduction successive desdites barres dans le convoyeur de morceaux 5. Le poussoir est actionné de façon séquentielle comme suit : le poussoir 14 est déplacé d'une distance correspondant à l'écartement de deux scies verticales successives (dimension d'une barre de fourrage selon la direction transversale), en vue de permettre le découpage en pavés d'une barre de fourrage 33 et l'introduction de la barre découpée à l'entrée du convoyeur de morceaux ; il est alors immobilisé le temps nécessaire à l'insertion successive et décalée de chacun des pavés de fourrage 230 à 233 dans le convoyeur de morceaux ; il est ensuite à nouveau déplacé d'une distance correspondant à l'écartement des scies verticales en vue du découpage de la barre de fourrage 33 suivante et de son introduction à l'entrée du convoyeur de morceaux.

Le convoyeur de morceaux comprend trois bandes sans fin 16, 17, 18, guidées en défilement longitudinal entre deux parois latérales 15a, 15b du convoyeur par des rouleaux tels que 41. La bande 17 s'étend en partie inférieure du convoyeur et réalise un rail inférieur 21 fixe d'un chemin de convoyage 19 des morceaux 23, ayant approximativement la forme d'un arc de cercle. Qu'elle soit en défilement ou à l'arrêt, la bande 17 est constamment tendue autour d'une série de rouleaux fixes, et est ainsi maintenue à un emplacement fixe. La bande 16 s'étend en partie supérieure du convoyeur et réalise, sur une portion principale amont du chemin de convoyage 19, en regard du rail inférieur 21, un rail supérieur 20 mobile dudit chemin de convoyage. A l'entrée du convoyeur, c'est-à-dire en sortie du poste 3 de découpage, les bandes 16 et 17 s'étendent orthogonalement à la direction longitudinale A. La bande 16 est agencée autour de rouleaux fixes tels que 41 sur une fraction supérieure de sa longueur, et est laissée libre sur une fraction inférieure de sa longueur, de sorte que l'écartement entre la bande 16 et la bande 17 le long du chemin de convoyage 19 n'est pas fixe (l'emplacement du rail 20 varie). Cette latitude permet auxdites bandes de recevoir des morceaux 23 d'épaisseur (dimension des morceaux selon une direction orthogonale aux bandes, qui coïncide avec la direction longitudinale de pressage, à l'entrée du convoyeur) différentes. En défilement, la bande 16 tend à se rapprocher de la bande 17 sous l'effet de la force centrifuge, de sorte que les morceaux 23 sont comprimés entre les bandes et sont ainsi à la fois maintenus au niveau de leurs plans de coupe transversaux et entraînés par les bandes.

L'insertion successive et décalée de chacun des pavés de fourrage 230 à 233 dans le convoyeur de morceaux s'effectue au moyen de quatre organes 340, 341, 342, 343 d'écartement des bandes 16 et 17 du convoyeur, constituant des moyens de séparation des morceaux selon l'invention. Lesdits organes d'écartement sont agencés à l'entrée du convoyeur, de façon à être situés chacun en regard de l'un des quatre pavés de fourrage découpés par les scies horizontales et introduits dans le convoyeur par le poussoir 14. Chaque organe 340 à 343 comprend trois rouleaux 42, 43, 44 autour desquels la bande 16 s'enroule alternativement (en d'autres termes, les rouleaux sont alternativement à l'intérieur ou à l'extérieur de la bande), de façon à pouvoir être déplacée orthogonalement à sa direction de défilement par déplacement desdits rouleaux (orthogonalement à la direction de défilement). Les rouleaux sont montés entre deux plaques latérales 45 fixées à l'extrémité d'un piston 46 en vue de leur déplacement.

Lors du déplacement du poussoir latéral 14 en vue du découpage de la barre de fourrage 33 et de l'introduction de la barre découpée dans le convoyeur 5, les rouleaux 42 à 44 des quatre organes d'écartement 340 à 343 sont maintenus dans une position, dite position écartée, telle qu'illustrée à la figure 3 pour les organes 342 et 343. Dans cette position, la bande 16 est à distance des pavés de fourrage 230 à 233 introduits, de sorte que lesdits pavés ne sont pas entraînés par les bandes en défilement. Le piston 46 du premier organe 340 (organe supérieur) est alors actionné de façon à rapprocher la bande 16 de la bande 17 jusqu'à une position des rouleaux 42 à 44, dite position d'entraînement, dans laquelle la bande 16 vient au contact du premier pavé de fourrage 230 (pavé aval supérieur). Coincé entre les bandes 16 et 17 en défilement, le pavé de fourrage 230 est entraîné dans le convoyeur de morceaux le long du chemin de convoyage, comme illustré à la figure 3. Au bout d'un temps donné, lorsque le pavé de fourrage 230 est à une distance prédéterminée de l'entrée du convoyeur (figure 3), le piston 46 du deuxième organe d'écartement 341 est actionné de façon à rapprocher la bande 16 de la bande 17 en regard du deuxième pavé de fourrage 231, jusqu'à une position d'entraînement dans laquelle la bande 16 vient au contact dudit pavé 231, provoquant ainsi son entraînement dans le convoyeur. De façon similaire, les organes d'écartement 342 et 343 sont actionnés tour à tour pour l'entraînement successif et décalé des pavés de fourrage 232 et 233. Lorsque le dernier pavé de fourrage (233) est à une distance donnée de l'entrée du convoyeur, les pistons des quatre organes d'écartement sont simultanément actionnés de façon à déplacer les rouleaux 42 à 44 desdits organes jusqu'à leur position écartée initiale.

Il est à noter que les scies horizontales 13a à 13c sont de préférence escamotables. Lorsque celles-ci sont placées en position escamotée, les morceaux de balle emballés selon l'invention correspondent alors aux barres de fourrage 33. Ainsi, selon la masse souhaitée pour les paquets emballés, on sélectionne, d'une part, l'épaisseur des morceaux en ajustant la position de la butée de tranchage 40, et d'autre part, la hauteur desdits morceaux (2 choix possibles uniquement) en choisissant d'utiliser ou de retirer (dans une position escamotée) les scies horizontales. Lorsque les scies horizontales sont en position escamotée et que les morceaux à emballer correspondent à des barres telles que 33, les pistons des quatre organes d'écartement 340 à 343 sont alors commandés simultanément, soit pour écarter la bande 16 de la bande 17 en vue de l'insertion de la barre de fourrage 33 à l'entrée du convoyeur par le poussoir 14 (les rouleaux 42 à 44 des quatre organes sont en position écartée), soit pour rapprocher la bande 16 de la bande 17 en vue de l'entraînement de la barre de fourrage dans le convoyeur (les rouleaux 42 à 44 des quatre organes sont en position d'entraînement).

A titre d'exemple, à partir de balles fourragères présentant une section de 80 cm de hauteur par 120 cm de largeur et une masse volumique moyenne de 180 kg/m³, on réalise :
- des paquets emballés de 14 kg en agençant les scies horizontales en position escamotée et en positionnant la butée de tranchage 40 à une distance de l'ordre de 32 cm de la scie transversale 10 ; les paquets obtenus mesurent 32x80x30 cm³,
- de paquets emballés de 4 kg en agençant les scies horizontales en position escamotée et en positionnant la butée de tranchage 40 à une distance de l'ordre de 9 cm de la scie transversale 10 ; les paquets obtenus mesurent 9x80x30 cm³,
- des paquets emballés de 1 kg en agençant les scies horizontales en position de découpe et en positionnant la butée de tranchage 40 à une distance de l'ordre de 9 cm de la scie transversale 10 ; les paquets obtenus mesurent 9x20x30 cm³.

Il est à noter que, selon l'invention, la dimension la plus petite des paquets ou morceaux de balle, qui n'est que de 9 cm, est prise dans la direction longitudinale de la balle (découpes selon des plans transversaux) en vue de limiter la quantité de brins et/ou feuilles sectionnés tout en obtenant des morceaux auto-portants et cohésifs.

Les dimensions des paquets emballés obtenus sont compatibles avec celles des palettes de chargement usuelles. Elles sont notamment particulièrement adaptées aux palettes normalisées de type Europe.

La bande 18 du convoyeur de morceaux 5 est agencée en sortie du convoyeur 5 et réalise, sur une portion secondaire aval du chemin de convoyage 19, en regard et à proximité du rail inférieur 21, un rail supérieur 22 fixe dudit chemin de convoyage. La distance entre la bande 18 et la bande 17 est fixe et est adaptée pour recevoir les morceaux les plus épais susceptibles d'être découpés par le dispositif. L'entraînement des morceaux sur cette portion secondaire aval du chemin de convoyage est assuré par les bandes 17 et 18 en défilement et/ou par l'actionnement d'un poussoir vertical 24. Le poussoir 24 permet non seulement d'entraîner les morceaux de balle peu épais le long de la portion secondaire aval du chemin de convoyage, mais aussi et surtout d'introduire individuellement chaque morceau dans un sac formé à partir d'un film 25 dans le poste d'emballage 4. Les déplacements verticaux de ce poussoir sont synchronisés avec l'arrivée des morceaux dans la portion aval du chemin de convoyage, c'est-à-dire avec les moyens d'introduction (poussoir) 14 et de séparation 340 à 343 des morceaux dans le convoyeur 5. A noter que ce poussoir 24 assure un déplacement des morceaux mais ne réalise aucune compression de ceux-ci.

Le poste d'emballage 4 est du type dit FFS ("Form Fill Seal"), et comprend, de façon connue, un conformateur de sac à partir d'un film plastique 25 en rouleau (largeur de la laize comprise entre 85 et 130 cm selon le poids et donc les dimensions des paquets emballés fabriqués), qui comporte un dérouleur de bobine, des moyens d'entraînement du film (non représenté) en défilement longitudinal, des accumulateurs de film 26, un conformateur 27 en col de cygne, une forme tube 28, des moyens 29 de thermosoudure longitudinale pour la soudure des bords longitudinaux de la laize de film, et des moyens 30 de thermosoudure transversale pour la soudure de sections du tube de film formé autour de la forme 28. Le film défile sans interruption de façon à former en continu des sacs tels que le sac du paquet 31, qui réalise une enveloppe d'emballage dudit paquet. Un sac est formé par soudure, par les moyens 30, d'une section du tube de film réalisé et soudé autour de la forme 28. Le poussoir 24 est alors actionné de façon à introduire un morceau 23 dans la forme 28 et à pousser le morceau et le sac formé hors de la forme 28, jusqu'à ce qu'ils s'étendent en dessous de la forme 28 ; les moyens 30 referment alors le sac par thermosoudure.

Le paquet emballé 31 ainsi formé tombe sur un convoyeur de déchargement 32 à tapis, puis est déchargé du dispositif selon l'invention sur des palettes en vue de son stockage et/ou de son transport.

L'ensemble des moyens motorisés pour le convoyage des balles, morceaux et paquets emballés et pour l'entraînement des éléments de coupe est commandé et synchronisé par des moyens informatiques de contrôle (non représentés), éventuellement supervisés par un opérateur.

Le dispositif selon l'invention est simple, compact, peu onéreux, et permet de fabriquer des paquets emballés de fourrage sec à faible coût de revient.

Il va de soi que l'invention peut faire l'objet de nombreuses variantes par rapport aux modes de réalisation précédemment décrits et représentés sur les figures.

En particulier, les éléments de coupe transversale peuvent être réalisés par une lame de tranchage du type guillotine (en lieu et place de la scie 10).

Par ailleurs, les éléments de coupe longitudinale horizontale peuvent être réalisés par une ou plusieurs scie droite horizontale, de type agricole, s'étendant sensiblement dans un plan horizontal, et des moyens motorisés d'entraînement aptes à animer chaque scie droite horizontale de petits mouvements alternatifs transversaux, le dispositif comprenant dans ce cas des moyens (tels que le poussoir de convoyage) de déplacement de la balle selon sa direction longitudinale à travers la(les)dite(s) scie(s) droite(s) horizontale(s) ou des moyens de déplacement de chaque scie droite horizontale en translation selon la direction longitudinale à travers la balle.

Le dispositif peut également comporter un détecteur de métal en amont du poste 3 de découpage.

Il est également possible de prévoir des moyens de réglage de l'écartement des joues latérales du convoyeur de balles et des moyens de réglage de l'espacement des scies verticales, en vue d'adapter le dispositif à des balles de largeurs diverses.

Par ailleurs, les moyens de séparation des morceaux à l'entrée du convoyeur de morceaux peuvent être réalisés par deux bandes sans fin synchronisées supplémentaires, agencées en regard l'une de l'autre de façon à coopérer pour l'entraînement des morceaux et à définir un chemin de réception des morceaux à la sortie dudit poste de découpage. Ces deux bandes, dites bandes de séparation, sont agencées en regard de la sortie du poste de découpage, à l'amont et dans le prolongement des bandes du convoyeur de morceaux, lesquelles bandes de convoyage diffèrent de celles illustrées en ce qu'elles définissent un chemin de convoyage commençant plus en aval, au-dessus et à distance de la sortie du poste de découpage. L'actionnement du poussoir latéral 14 entraîne, dans ce cas, l'introduction d'une barre de fourrage 33 entre les bandes de séparation. Les bandes de séparation sont alors actionnées de façon séquentielle comme suit. Elles défilent tout d'abord de façon à déplacer ladite barre jusqu'à ce que le premier pavé de fourrage 230 s'engage entre les bandes de convoyage, également en défilement. A l'instant où le premier pavé 230 est happé par les bandes de convoyage, les bandes de séparation sont immobilisées, ce, pendant un temps donné durant lequel le premier pavé de fourrage, entraîné par les bandes de convoyage en défilement, s'éloigne d'une distance prédéterminée du deuxième pavé de fourrage 231 resté coincé entre les bandes de séparation immobilisées. Les bandes de séparation sont alors mues de nouveau pour permettre l'introduction du deuxième pavé de fourrage 231 entre les bandes de convoyage, et ainsi de suite.

## Revendications

1. Procédé de conditionnement de fourrage sec pour litière ou pour nourriture animale, en paquets emballés contenant sensiblement une masse souhaitée de fourrage comprise entre 0,5 et 20 kg, lesdits paquets étant réalisés à partir de balles fourragères sèches (1) compactées au moins selon une direction longitudinale (A) de pressage et maintenues par des liens,
**caractérisé en ce que** :
- on retire les liens (101) de chaque balle fourragère,
- on achemine chaque balle fourragère ainsi déliée vers un poste de découpage,
- on découpe chaque balle fourragère (1), qui présente une masse volumique donnée, de façon à former des morceaux (23) de balle fourragère ayant des dimensions prédéterminées qui définissent un volume de fourrage correspondant sensiblement, selon ladite masse volumique, à la masse souhaitée pour les paquets emballés, chaque balle étant découpée selon des plans de coupe transversaux sensiblement orthogonaux à la direction longitudinale de pressage de la balle, de façon à former des tranches de balle, et selon au moins un plan de coupe longitudinal contenant sensiblement ladite direction longitudinale,
- on sépare les morceaux ainsi découpés et on achemine individuellement chaque morceau vers un poste d'emballage,
- on conditionne individuellement chaque morceau (23) dans une enveloppe de façon à former un paquet de fourrage emballé (31).

2. Procédé selon la revendication 1, **caractérisé en ce que** l'on utilise des balles fourragères (1) parallélépipédiques.

3. Procédé selon l'une des revendications 1 ou 2, **caractérisé en ce que** la balle (1) est découpée selon au moins un plan de coupe longitudinal vertical contenant sensiblement la direction longitudinale (A) de la balle et une direction verticale.

4. Procédé selon l'une des revendications 1 à 3, **caractérisé en ce que** la balle (1) est découpée selon au moins un plan de coupe longitudinal horizontal contenant sensiblement la direction longitudinale (A) de la balle et une direction horizontale.

5. Procédé selon l'une des revendications 1 à 4, **caractérisé en ce que** chaque morceau (23) est individuellement acheminé en étant maintenu au moins au niveau de ses plans de coupe transversaux.

6. Dispositif de conditionnement de fourrage sec pour litière ou pour nourriture animale, en paquets emballés contenant sensiblement une masse souhaitée de fourrage comprise entre 0,5 et 20 kg, lesdits paquets étant réalisés à partir de balles fourragères sèches (1) compactées au moins selon une direction longitudinale (A) de pressage et maintenues par des liens,
**caractérisé en ce qu'**il comprend :
- un poste (2) de réception et de convoyage de balles fourragères (1) de masse volumique donnée, apte à acheminer chaque balle fourragère jusqu'à un poste (3) de découpage, et dans lequel les liens (101) de chaque balle fourragère sont retirés,
- ledit poste (3) de découpage des balles fourragères, comportant des éléments de coupe (10, 12a) adaptés pour découper chaque balle (1) de façon à former des morceaux (23) de balle fourragère ayant des dimensions prédéterminées qui définissent un volume correspondant, selon la masse volumique de la balle, à la masse souhaitée pour les paquets emballés, les éléments de coupe comprenant, d'une part, des éléments de coupe transversale (10), adaptés pour découper chaque balle selon des plans de coupe transversaux sensiblement orthogonaux à la direction longitudinale de pressage (A) de la balle, de façon à former des tranches de balle, et d'autre part, des éléments de coupe longitudinale (12a), adaptés pour découper chaque balle selon au moins un plan de coupe longitudinal contenant ladite direction longitudinale (A),
- des moyens (340, 343) de séparation des morceaux (23) ainsi découpés, et des moyens (16, 17) de convoyage de morceaux adaptés pour acheminer individuellement chaque morceau jusqu'à un poste (4) d'emballage,
- ledit poste (4) d'emballage, adapté pour conditionner individuellement chaque morceau (23) dans une enveloppe de façon à former un paquet de fourrage emballé (31).

7. Dispositif selon la revendication 6, **caractérisé en ce que** les moyens (16, 17) de convoyage de morceaux sont adaptés pour maintenir chaque morceau (23) au moins au niveau de ses plans de coupe transversaux.

8. Dispositif selon l'une des revendications 6 ou 7, **caractérisé en ce que** les moyens de convoyage des morceaux comprennent un convoyeur à bandes synchronisées comportant au moins deux bandes sans fin (16, 17) en défilement, en regard et à proximité l'une de l'autre sur une portion de leur longueur de façon à délimiter un chemin de convoyage (19), l'une (17), première, desdites bandes étant maintenue à un emplacement fixe le long de ce chemin, la deuxième bande (16) étant agencée libre le long d'une partie au moins dudit chemin de façon à venir plaquer les morceaux (23) de balle contre la première bande (17).

9. Dispositif selon la revendication 8, **caractérisé en ce que** les première et deuxième bandes (16, 17) sont agencées de façon à s'étendre, à l'entrée du convoyeur, selon une direction de défilement sensiblement orthogonale à la direction longitudinale (A) de pressage.

10. Dispositif selon l'une des revendications 8 ou 9, **caractérisé en ce que** les moyens de séparation comprennent au moins un organe d'écartement (340, 341, 342, 343) des bandes (16, 17) adapté pour modifier la distance d'écartement desdites bandes à l'entrée du convoyeur de morceaux, de façon à pouvoir, d'une part écarter les bandes d'une distance supérieure à une dimension, dite épaisseur, d'un morceau selon une direction orthogonale auxdites bandes en vue de son introduction dans le convoyeur, et d'autre part rapprocher les bandes jusqu'à une distance égale ou inférieure à l'épaisseur du morceau en vue de son entraînement par lesdites bandes.

11. Dispositif selon l'une des revendications 6 à 10, **caractérisé en ce que** le poste (2) de réception et de convoyage de balles comprend un convoyeur de balles à rouleaux, comportant, d'une part, une table (37) formée d'une succession de rouleaux inférieurs montés rotatifs autour d'axes transversaux et, d'autre part, des joues latérales (7a, 7b) adaptées pour contenir latéralement les balles (1), et un poussoir (9) motorisé rétractable, dit poussoir de convoyage, monté coulissant sur un rail supérieur (8) en regard de ladite table (37), apte à déplacer au moins une balle selon sa direction longitudinale vers le poste de découpage (3).

12. Dispositif selon l'une des revendications 6 à 11, **caractérisé en ce que** les éléments de coupe transversale comprennent une scie (10), dite scie transversale, de type agricole, s'étendant dans un plan sensiblement transversal, des moyens motorisés d'entraînement de la scie transversale aptes à animer la scie de petits mouvements alternatifs transversaux et à déplacer la scie en translation selon la direction verticale (C), le dispositif comprenant des moyens (9) de déplacement de chaque balle à travers le poste de découpage et des moyens d'immobilisation (40) de la balle sous la scie transversale (10) en vue de son tranchage.

13. Dispositif selon la revendication 12, **caractérisé en ce que** les moyens de déplacement des balles à travers le poste de découpage sont réalisés par le poussoir de convoyage (9), et **en ce que** les moyens d'immobilisation comprennent une butée (40), dite butée de tranchage, en aval de la scie transversale (10), contre laquelle vient buter la balle poussée par le poussoir de convoyage.

14. Dispositif selon la revendication 13, **caractérisé en ce qu'**il comprend des moyens de réglage de la position relative de la scie transversale (10) et de la butée de tranchage (40).

15. Dispositif selon l'une des revendications 12 à 14, **caractérisé en ce qu'**il comprend une plaque (11) verticale coulissante, dite plaque de séparation, s'étendant sensiblement dans un plan transversal en regard de la scie transversale (10) pour la séparation de la tranche de balle fourragère découpée.

16. Dispositif selon l'une des revendications 6 à 15, **caractérisé en ce qu'**il comprend des éléments de coupe longitudinale verticale, comportant au moins une scie (12a, 12b, 12c), dite scie verticale, de type agricole, chaque scie verticale s'étendant sensiblement dans un plan longitudinal vertical, et des moyens motorisés d'entraînement aptes à animer chaque scie verticale de petits mouvements alternatifs verticaux, le dispositif comprenant des moyens de déplacement (9) de chaque balle ou d'une tranche de balle selon la direction longitudinale à travers la(les)dite(s) scie(s) verticale(s) ou des moyens de déplacement de chaque scie verticale en translation selon la direction longitudinale à travers la balle ou tranche de balle.

17. Dispositif selon la revendication 16, **caractérisé en ce que** les moyens de déplacement des balles à travers la(les)dite(s) scie(s) verticale(s) sont réalisés par le poussoir de convoyage (9).

18. Dispositif selon l'une des revendications 6 à 17, **caractérisé en ce qu'**il comprend des éléments de coupe longitudinale horizontale, comportant au moins une scie circulaire (13a, 13b, 13c), dite scie horizontale, de type agricole, chaque scie horizontale s'étendant sensiblement dans un plan longitudinal horizontal, et des moyens motorisés (35) d'entraînement de chaque scie horizontale en rotation, le dispositif comprenant des moyens (14) de déplacement d'une tranche de balle selon la direction transversale à travers la(les)dite(s) scie(s) horizontale(s) ou des moyens de déplacement de chaque scie horizontale en translation selon la direction transversale à travers la balle ou tranche de balle.

19. Dispositif selon l'une des revendications 6 à 18, **caractérisé en ce que** le poste d'emballage comprend des moyens (27, 28) de conformation d'une enveloppe en forme de sac à partir d'une bande (25) de film plastique en défilement.

20. Dispositif selon l'une des revendications 6 à 19, **caractérisé en ce qu'**il comprend des moyens (24) d'introduction des morceaux de balle fourragère dans le poste d'emballage, adaptés pour introduire séparément chacun des morceaux dans un sac.

21. Dispositif selon la revendication 20, **caractérisé en ce que** les moyens de convoyage de morceaux comprennent au moins une première bande sans fin (17) s'étendant sur toute la longueur d'un chemin de convoyage (19) entre le poste de découpage (3) et le poste d'emballage (4), une deuxième bande sans fin (16) s'étendant en regard et à proximité de la première bande sur une portion principale amont dudit chemin de convoyage à partir du poste de découpage, et une troisième bande sans fin (18) s'étendant, dans le prolongement de la deuxième bande, en regard et à proximité de la première bande sur une portion secondaire aval du chemin de convoyage jusqu'au poste d'emballage, et **en ce que** les moyens d'introduction comprennent un poussoir (24) intercalé entre la deuxième et la troisième bandes.

22. Dispositif selon l'une des revendications 6 à 21, **caractérisé en ce qu'**il comprend un détecteur de métal en amont du poste de découpage (3) et un système de sécurité apte, en cas de détection de métal par ledit détecteur, à émettre un signal d'alerte et/ou à inhiber le poussoir de convoyage et/ou les éléments de coupe.

23. Dispositif selon l'une des revendications 6 à 22, **caractérisé en ce qu'**il comprend des moyens (32) de déchargement des paquets emballés (31), tels qu'un convoyeur à tapis.

24. Dispositif selon l'une des revendications 6 à 23, **caractérisé en ce que** le poste (2) de réception et de convoyage de balles comprend des moyens de pesée adaptés pour peser chaque balle fourragère et calculer sa masse volumique.

25. Produit fourrager emballé (31), **caractérisé en ce qu'**il comprend, d'une part, une masse comprise entre 0,5 et 20 kg d'un matériau fourrager sec compacté présentant plus de 20% de brins et/ou feuilles de longueur supérieure à 20 cm et ayant un aspect naturel tel que celui du fourrage en balles, et d'autre part, une enveloppe dans laquelle est conditionné ledit matériau fourrager.

26. Produit fourrager emballé selon la revendication 25, **caractérisé en ce que** le matériau fourrager présente plus de 50% de brins et/ou feuilles de longueur supérieure à 20 cm.

27. Produit fourrager emballé selon l'une des revendications 25 ou 26, **caractérisé en ce que** l'enveloppe comprend un film plastique transparent formant sac, imprimé sur une partie de sa surface.
